# EUROPÄISCHE PATENTSCHRIFT

(11) **EP 2 663 418 B1**
(45) Veröffentlichungstag und Bekanntmachung des Hinweises auf die Patenterteilung: **07.06.2017**
(21) Anmeldenummer: 12706439.2
(22) Anmeldetag: 12.01.2012
(51) Int. Cl.: B23K 9/167, B23K 9/29

(54) **SCHWEISSKOPF MIT BEWEGLICHER ELEKTRODE UND DAZUGEHÖRIGES SCHWEISSVERFAHREN**
WELDING HEAD WITH MOVABLE ELECTRODE AND CORRESPONDING WELDNG METHOD
TÊTE DE SOUDAGE AVEC ÉLECTRODE MOBILE ET MÉTHODE DE SOUDAGE CORRESPONDANTE

(30) Priorität: 13.01.2011 DE 102011008515; 04.04.2011 DE 102011016026
(43) Veröffentlichungstag der Anmeldung: 20.11.2013
(73) Patentinhaber: Weiss, Daniel, 88518 Herbertingen (DE)
(72) Erfinder: Weiss, Daniel, 88518 Herbertingen (DE)
(74) Vertreter: Müller, Eckhard
(86) Internationale Anmeldenummer: PCT/DE2012/000022
(87) Internationale Veröffentlichungsnummer: WO 2012/095103

(56) Entgegenhaltungen:
- EP-A1- 0 849 025
- DE-B1- 1 565 627
- JP-A- 7 314 138
- JP-A- 55 057 378
- US-A- 3 396 263
- US-A- 4 455 471
- US-A- 5 155 405
- US-A- 5 965 037

## Beschreibung

Die Erfindung betrifft einen Schweißkopf nach dem Oberbegriff des Patentanspruchs 1 und ein Verfahren, bei welchem ein Schweißkopf nach dem Oberbegriff des Patentanspruchs 1 verwendet wird.

Aus der US 5,965,037 A ist ein Schweißkopf mit einer sich drehenden Schweißelektrode bekannt, welche den bei einem Schweißvorgang erzeugten Lichtbogen in eine Drehung um sich selbst versetzt, wodurch Gaseinschlüsse in dem Schweißbad vermieden werden sollen. Der Schweißkopf wird dabei bezüglich der Rotationsachse der Elektrode festgesetzt.

Weitere Schweißvorrichtungen sind aus den Druckschriften JP 7 314 138 A,

US 4,455,471 A, JP 55 057 378 A, US 3,396,263 A, US 5,155,405 A sowie DE 15 65 627 B1 bekannt.

Aus dem Stand der Technik ist ferner ein herkömmlicher Schweißkopf insbesondere zum Handschweißen von als elektrische Masse wirkenden metallischen Werkstücken mit einer hitzebeständigen, den Schweißstrom führenden Elektrode, wobei der Schweißvorgang durch einen von der Elektrode ausgehenden und zum Werkstück führenden und durch eine Spannungsquelle gespeisten Lichtbogen bewirkt wird und wobei etwa notwendig werdendes Schweißmaterial zugefügt wird, bekannt, beispielsweise auch aus dem Lehrbrief WIG-Schweißen 2009, www.hausundwerkstatt24.de/dokumente/wig-lehrbrief.pdf.

Die Verwendung derartiger Schweißköpfe in sogenannten WIG- Schweißapparaten ist beispielsweise aus der 1. Auflage 2006"Wolfram-Intergasschweißen" des DVS- Verlag (Deutscher Verband für Schweißen und verwandte Verfahren e.V.) bekannt.

Beim Schweißen mit derartigen Schweißapparaten wird ausgehend von einer, mit einer Spannungsquelle verbundenen Elektrode ein Lichtbogen erzeugt, der an dem zu schweißenden Werkstück endet, welches als elektrische Masse wirkt.

Bei derartigen Schweißvorgängen kann je nach Bedarf von außen ein Zusatzstoff zugeführt werden oder das sogenannte Schmelzbad allein aus dem Material des Werkstücks entstehen.

Die Zündung des Lichtbogens kann entweder durch sogenannte Kontaktzündung oder durch Hochfrequenzzündung erfolgen, wobei im ersten Fall kurzzeitig ein mechanischer Kontakt zwischen Elektrode hergestellt wird und im zweiten Fall kurzzeitig eine Hochfrequenz zwischen Elektrode und Werkstück angelegt wird.

Beim Schweißen mit derartigen Schweißköpfen besteht für den Fall, dass diese von Hand geführt werden, immer wieder die Gefahr, dass bei einem unbeabsichtigten mechanischen Kontakt während des Schweißvorgangs ein sogenanntes Auflegieren der Elektrode eintritt, das heißt dass die Elektrode unabsichtlich mit dem Werkstück verschweißt wird.

Dies ist vor allem bei ungeübtem Personal und bei schwer zugänglicher Schweißverbindung an komplexen Werkstücken der Fall, tritt aber durchaus auch bei geübter Hand hin und wieder auf.

Nach einem Auflegieren muss man die Elektrode wieder vom Werkstück trennen.

Beim Trennvorgang bricht in der Regel aufgrund der Materialeigenschaften von Wolfram ein Stück der Elektrodenspitze ab und bleibt als Materialeinschluss mit dem Werkstück verbunden. Solche Materialeinschlüsse erfordern aufwendige Schleif- und ähnliche Nachbesserungsarbeiten, oder können gar zu Ausschuss führen, wenn die Nachbesserungsarbeiten zu aufwendig sind, oder wenn durch letztere die mechanischen Anforderungen an das Werkstück nicht mehr erfüllt werden können.

Bei Werkstücken aus hochwertigen korrosionsbeständigen Legierungen können solche Materialeinschlüsse zudem der Ausgangspunkt für Korrosionserscheinungen sein. Darüber hinaus wird ein Nachschleifen der Elektrode in eine wieder verwendbare Form notwendig.

Damit ergibt sich ein hoher zusätzlicher Kostenfaktor, zum einen durch den enormen Zeitverlust durch die Nacharbeit sowohl an der Schweißverbindung als auch an der Elektrode und zum anderen der Materialverschleiß an Elektrode und an Schleif- oder ähnlichem Bearbeitungsmaterial.

Zwar lassen sich unter Verwendung einer Vorrichtung zur Führung und Annäherungsverhinderung des Schweißkopfes an das zu bearbeitende Werkstück die vorstehend beschriebenen Nachteile bei einigen handgeführten Schweißarbeiten verhindern. Dies lohnt sich im Allgemeinen aber aus Kostengründen nur dann, wenn es sich dabei um gleichartige Schweißarbeiten handelt. Darüber hinaus wird auch aus Platzgründen die Verwendung solcher Vorrichtungen nicht immer möglich sein.

Um die vorstehend beschriebenen Nachteile insbesondere bei höheren Schweißströmen etwas abzumildern, wird beim sogenannten TCS (TIG - Comfort Stop) Schweißen bei Annäherung der Elektrode an das Werkstück der Schweißstrom automatisch heruntergesetzt. Dadurch fallen die mit einer Auflegierung verbundenen Schäden an Elektrode und Werkstück etwas geringer aus.

Es war daher Aufgabe der Erfindung einen Schweißkopf nach dem Oberbegriff des Patentanspruchs 1 zu schaffen und ein Verfahren nach dem Patentanspruch 12 anzugeben, bei dem ein Auflegieren der Elektrode auf das Werkstück selbst bei direkter mechanischer Berührung nicht mehr eintreten kann und darüber hinaus das Festsetzen von Tropfen des Schweißmaterials an der Elektrode weitgehend verhindert wird.

Diese beiden Aufgaben werden durch die kennzeichnenden Merkmale des Patentanspruchs 1 und durch den Gegenstand des Patentanspruchs 12 gelöst.

Durch die bewegliche Lagerung der Elektrode und durch ihre von der Vorrichtung ausgeübte Bewegung tritt auch für den Fall einer Kontaktierung zwischen Elektrode und Werkstück nahezu kein Verschleiß der Elektrode mehr ein. Darüber hinaus findet auch kein Einschluss von Elektrodenmaterial in das Werkstück mehr statt. Ein Nachschleifen der Elektrode nach Kontakt mit dem Werkstück ist daher frühestens erst nach mehrmaligen Kontakten wieder notwendig.

Dadurch kann man beim handgeführten Schweißen erheblich Zeit und dadurch auch Kosten sparen und auch zügiger voranschreiten, da ein Kontakt der Elektrode mit dem Werkstück nicht zwangsläufig zu einer Arbeitsunterbrechung führt. Darüber hinaus können auch kompliziertere Schweißarbeiten von weniger erfahrenen Personen ausgeführt werden, wodurch ebenfalls Kosten gespart werden können.

Für den Fall, dass zur Durchführung des Schweißvorganges zusätzliches Schweißmaterial zugeführt wird, ergibt sich gegenüber ortsfesten Schweißelektroden der weitere Vorteil, dass die - auch ohne vorherige Berührung zwischen Schweißelektrode und Schweißmaterial - immer wieder auftretende, tropfenförmige Anheftung von verflüssigtem Schweißmaterial auf der Schweißelektrode bei der erfindungsgemäßen Schweißelektrode aufgrund ihrer Bewegung wesentlich seltener vorkommt.

Die mit einer solchen Anheftung verbundene, oft deutliche Verformung des Lichtbogens weg von der erwünschten kegelförmigen und fokussierten Gestalt, mit der Folge einer mehr oder weniger großen Abweichung vom erwünschten Schweißbild - und bei entsprechend großen Tropfen mangelhafter Schweißverbindung oder gar erfolglosem Schweißversuch - wird somit oft vermieden.

Demzufolge findet der erfindergemäße Schweißkopf nicht nur vorteilhafte Anwendung für den Fall, dass er von Hand geführt wird. Er lässt sich - für den Fall der Zuführung von Schweißmaterial - vielmehr auch bei solchen Schweißarbeiten vorteilhaft einsetzen, bei denen der Schweißkopf beispielsweise räumlich präzise von einem Roboter gesteuert wird. Dabei besteht in der Regel zwar keine Gefahr mehr für einen unbeabsichtigten Kontakt von Elektrode und Werkstück, es ergibt sich aber immer noch der Vorteil, dass durch die Bewegung der erfindungsgemäßen Schweißelektrode eine Anheftung von tropfenförmigem verflüssigtem Schweißmaterial und die damit verbundene Verschlechterung des Schweißbildes deutlich seltener auftritt.

Erfindungsgemäß besteht die Bewegung der Elektrode aus einer Rotation oder Oszillation um ihre eigene Achse (A). So lässt sich die Beweglichkeit der Elektrode mit relativ einfachen Mitteln realisieren.

Bei einer Rotation wird darüber hinaus die Stabilität des Lichtbogens weitest gehend gewahrt. In Übereinstimmung damit zeigten Zugversuche an miteinander verschweißten Werkstücken, dass die Zugfestigkeit nach deren Verschweißen mit dem erfindungsgemäßen Schweißkopf sich von der Zugfestigkeit von Verbindungen, die nach dem Stand der Technik verschweißt wurden, nicht wesentlich unterscheiden und damit ihre Funktion ebenso erfüllen. Weiterhin lässt sich für den Fall, dass Schweißmaterial von außen zugeführt wird, bei entsprechender Wahl der Rotationsgeschwindigkeit die Anheftung von tropfenförmigem verflüssigtem Schweißmaterial auf der Schweißelektrode und die damit verbundene Verschlechterung des Schweißbildes praktisch vollständig vermeiden.

Lässt man die Schweißelektrode eine oszillierende Bewegung ausführen, so gestaltet sich die Übertragung des Schweißstromes auf die Schweißelektrode besonders einfach, da aufgrund deren eingeschränkten Bewegungsablaufs immer noch eine feste Kabelverbindung zur Übertragung des Schweißstromes auf die Elektrode ausreicht. Weiterhin können aufgrund der direkten Kabelverbindung Leistungsverluste zwischen Spannungsversorgung und Elektrode vermieden werden.

Erfindungsgemäß wird ein Kraftschluss durch eine Spannvorrichtung zwischen einer Hülse und der Elektrode erzielt, wodurch die Elektrode sowohl gegen eine radiale als auch gegen eine Längsverschiebung gesichert wird. So ergibt sich eine konstruktiv einfach zu realisierende mechanische Kopplung zwischen Elektrode und Hülse, die für den Fall des Austausche der Elektrode auch leicht gelöst und wieder hergestellt werden kann.

Die Ausführungsform der Erfindung nach Anspruch 2 weist den Vorteil auf, dass keine Verletzungsgefahr von während der Schweißarbeiten immer wieder zur Seite gelegten Schweißköpfen ausgehen kann. Weiterhin wird die Vorrichtung zur Bewegung der Elektrode auch eine längere Lebensdauer haben, da sie immer nur bei tatsächlichem Bedarf in Betrieb genommen wird. Darüber hinaus kann auf diese Weise auch noch ein gewisses Maß an Energie eingespart werden.

Die Weiterbildung nach Anspruch 3 weist zudem den Vorteil auf, dass die die Schweißarbeiten ausführende Person nicht auf das Einschalten der Vorrichtung zur Bewegung der Elektrode zu achten hat. Darüber hinaus vereinfacht sich der Aufbau der nicht dargestellten elektrischen/elektronischen Schaltelemente des Schweißkopfs, da die Inbetriebnahme der Vorrichtung und das Einsetzen der Gasströmung mit demselben Einschaltsignal gesteuert werden können.

Die Ausführungsform der Erfindung nach Anspruch 4 bietet den Vorteil, dass die Elektrode möglichst reibungsarm gelagert ist, wodurch zum einen Verschleißerscheinungen der Vorrichtung minimiert werden und zum anderen dadurch die Leistungsanforderungen zur Bewegung der Elektrode möglichst gering ausfallen.

Der Vorteil der Weiterbildung der Erfindung gemäß Anspruch 5 liegt darin, dass diese eine konstruktiv einfache und preiswerte herzustellende Bauform der Spannvorrichtung darstellt.

Die Übertragung des Schweißstromes auf die bewegliche Elektrode nach Anspruch 6 bietet durch die von der Feder bis nahezu zu ihrer vollständigen Abnutzung bewerkstelligte selbsttätige Nachjustierung der Schleifkohle stets eine gute Kontaktierung der Hülse. Zudem bietet diese Ausführungsform den Vorteil eines niedrigen elektrischen Übergangswiederstandes und geringe Reibungsverluste bei deren Rotation.

Die Weiterbildung der Erfindung nach Anspruch 7 hat den Vorteil, dass derartige Schleifkohlen eine vergleichsweise hohe Leitfähigkeit haben, so dass ausreichend niedrige Übergangswiederstände auch mit vergleichsweise klein ausgebildeten Schleifkohlen erreicht werden.

Bildet man die Erfindung nach Anspruch 8 weiter, so ergibt sich neben einem sehr geringen Übergangswiderstand auch der Vorteil einer nahezu verschleißfreien Kontaktierung der Elektrode mit ihrer Spannungsversorgung.

Erfindungsgemäß wird die Hülse durch einen Gleichstrom-Elektromotor in Rotation oder über eine Exzentereinrichtung in eine oszillierende Bewegung versetzt. Dadurch ergibt sich der Vorteil, dass auch bei einem mechanischen Kontakt zwischen Werkstück und Elektrode gegen die damit verbundenen zunehmenden Reibungskräfte die Rotation beziehungsweise Oszillation dadurch aufrecht erhalten wird, dass der Gleichstrom-Elektromotor bis zu seiner Leistungsgrenze seine Leistungsaufnahme entsprechend erhöht. Der Vorteil der Ausführungsform der Erfindung nach Anspruch 9 besteht darin, dass die Antriebsachse des Gleichstrom-Elektromotors und die Achse der Rotation der Hülse räumlich beliebig zueinander angeordnet sein können, was bei der Auslegung des Schweißkopfes ziemlich große konstruktive Freiheiten ermöglicht. Darüber hinaus erlaubt diese Ausführungsform der Erfindung einen relativ einfachen Austausch der Hülse, wenn sich diese durch die von der Schleifkohle auf sie übertragenen relativ großen Ströme und der auftretenden Reibung im Laufe der Zeit abgenutzt hat. Des Weiteren kann mittels einer Zahnradverbindung eine beliebige Übersetzung gewählt werden und damit eine optimale Anpassung an den jeweils gewählten Gleichstrom-Elektromotor erreicht werden.

Bildet man die Erfindung nach Anspruch 10 weiter, so ergibt sich der Vorteil, dass der Schweißkopf in relativ schlanker Bauform gehalten werden kann und damit Schweißarbeiten in beengter Umgebung leichter ausgeführt werden können. Des Weiteren stellt diese Ausführungsform eine kostengünstige Lösung des Antriebs der Hülse dar.

Die Weiterbildung nach Anspruch 11 wirkt sich vor allem günstig auf die Lebensdauer sowohl der Schleifkohle als auch des Gleichstrom-Elektromotors aus. Es wird nämlich nicht nur dafür gesorgt, dass die Drehzahl des Gleichstrom-Elektromotors ausreichend hoch ist, um ein Auflegieren auch bei maximalem Schweißstrom zu verhindern, sondern die Drehzahl folgt dem Schweißstrom stets auch wieder so weit wie möglich nach unten.

Die Vorteile des Verfahrens nach Anspruch 12 richten sich jeweils danach, mit welchem von dem in den vorangehenden Ansprüchen beschriebenen Schweißkopf dieses ausgeführt wird. Ausgehend von den genannten Vorteilen der vorstehend erwähnten Ausführungsformen der Erfindung, die sämtliche auf dem Prinzip der Beweglichkeit der Elektrode beruhen, bietet sich auch eine Übertragung dieses Prinzips auf andere Schweißverfahren, insbesondere auf das Lichtbogenhandschweißen und das sogenannte MSG (Metall-Schutz-Gas) Schweißverfahren an (Vergleiche zu beiden Verfahren Wikipedia.org/Schweißen).

Im ersten Fall würde eine Bewegung der während des Schweißvorgangs abschmelzenden Stab-Elektrode eine Auflegierung hauptsächlich vor dem Schweißvorgang bei bereits eingeschalteter Stromquelle, insbesondere beim Zünden und unmittelbar nach dem Schweißvorgang bei noch eingeschalteter Stromquelle verhindern.

Im zweiten Fall würde eine Anwendung dieses Prinzips im Wege der mechanischen Umkehrung - das heißt eine Bewegung der den nachgefühlten Schweißdraht führenden sogenannten Schweißdüse um oder längs der Achse des Schweißdrahts - verhindern, dass beim unerwünschten sogenannten Zurückbrennen des Schweißdrahts bis zur Schweißdüse der Schweißdraht nicht auf der Schweißdüse auflegiert.

Im Folgenden werden fünf Ausführungsbeispiele der Erfindung anhand der Figuren 1-7 beschrieben.

Dabei zeigt:
- Fig. 1: eine Prozessdarstellung des Schweißvorgangs, bei dem der erfindungsgemäße Schweißkopf eingesetzt wird,
- Fig. 2: eine perspektivische Seitenansicht einer ersten Ausführungsform des erfindungsgemäßen Schweißkopfes, dessen Gehäuse aus transparentem Material besteht und bei dem die Hülse durch einen Gleichstrom-Elektromotor, dessen Antriebsachse koaxial zur Hülse angeordnet ist in Rotationsbewegung versetzt wird.
- Fig. 3: einen Längsschnitt durch den erfindungsgemäßen Schweißkopf nach Fig. 2,
- Fig. 4: eine zweite Ausführungsform des erfindungsgemäßen Schweißkopfs, dessen Gehäuse nicht dargestellt ist und bei dem Hülse und Antriebsachse des Gleichstrom-Elektromotors räumlich senkrecht zueinander angeordnet sind,
- Fig. 5: einen nicht erfindergemäßen Schweißkopf, dessen Gehäuse ebenfalls nicht dargestellt ist und bei dem die Hülse von einer koaxial angeordneten Turbine angetrieben wird,
- Fig. 6: ein gegenüber der Fig.5 abgewandeltes Beispiel eines nicht erfindungsgemäßen Schweißkopfes in Schnittdarstellung längs der Achse der Elektrode, bei dem die Schweißstromübertragung auf die Hülse mittels einer elektrisch leitenden Flüssigkeit erfolgt.
- Fig. 7: eine dritte Ausführungsform des erfindergemäßen Schweißkopfes, dessen Gehäuse ebenfalls nicht dargestellt ist bei dem die Hülse durch einen Gleichstrom-Elektromotor über einen Exzenter in eine Oszillationsbewegung versetzt wird.

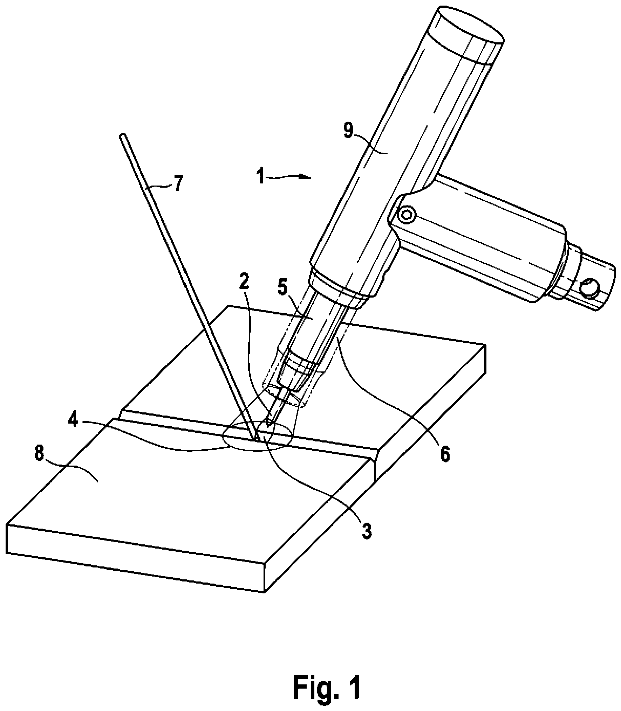

Figur 1 zeigt in einer Prinzipdarstellung den so genannten WIG (Wolfram-Inert-Gas) Schweißprozess unter Verwendung des erfindergemäßen Schweißkopfes (1). Kernstück des Schweißkopfes (1) ist eine nicht abschmelzende, extrem temperaturbeständige Elektrode (2). Ein von der Elektrode (2) ausgehender Lichtbogen (3) erhitzt und verflüssigt den Werkstoff eines aus zunächst aus zwei getrennten Teilen bestehenden Werkstücks (8), die beispielsweise jeweils aus Stahl bestehen und zusammengeschweißt werden sollen. Das Zünden des Lichtbogens (3) kann ohne Berührung des Werkstücks (8) durch die Elektrode (2) erfolgen. Dazu dient eine nicht dargestellte elektrische Einheit mit einer Hochspannungsquelle, die beim Zündvorgang kurzzeitig zusätzlich zur Dauerstromquelle der Elektrode (2) zugeschaltet wird Das Schweißen erfolgt bei den meisten Werkstücken mit Gleichstrom wobei aber bei aus Aluminium bestehenden Werkstücken Wechselstrom verwendet wird.

Bei der in Figur 1 dargestellten sogenannten V- Stoßverbindung wird im Allgemeinen zusätzliches Schweißmaterial (7) verwendet, welches üblicherweise in Drahtform vorliegt. Bei vielen Anwendungen ist aber kein zusätzliches Schweißmaterial (7) notwendig. Um die Elektrode (2) ist eine Gasdüse (5) und eine Keramikhülse (6) angeordnet. Die austretende Gasströmung (4) dient als Schutzgas, in dem sie das erhitzte Werkstück (8) vor chemischen Reaktionen mit der umgebenden Luft schützt und gewährleistet dadurch die gebotene Festigkeit und Zähigkeit der Schweißverbindung. Als Schutzgase (7) können verschiedene Edelgase dienen, in den meisten Fällen ist dies Argon. All diese Schutzgase (7) sind reaktionsträge, worauf die Fachbezeichnung "Inert" hinweist.

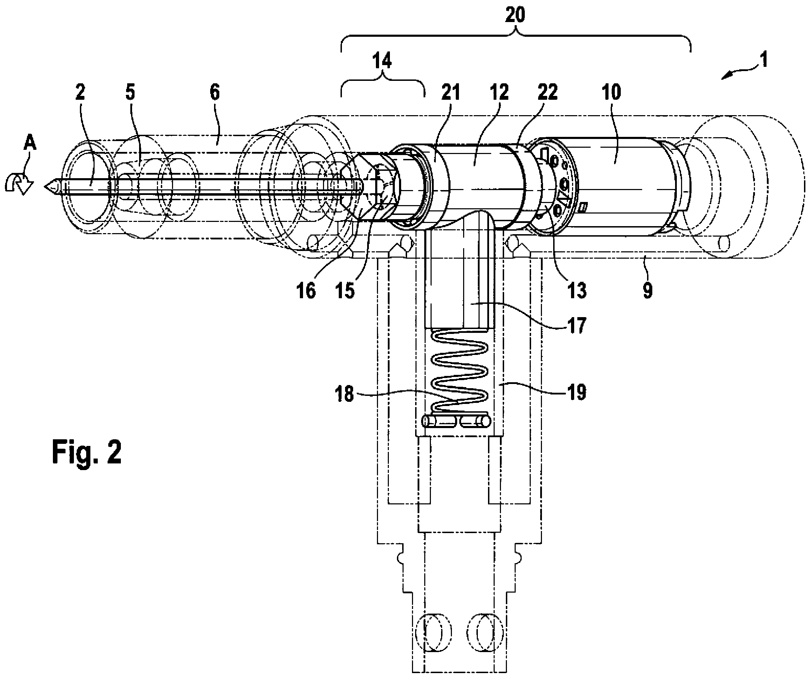

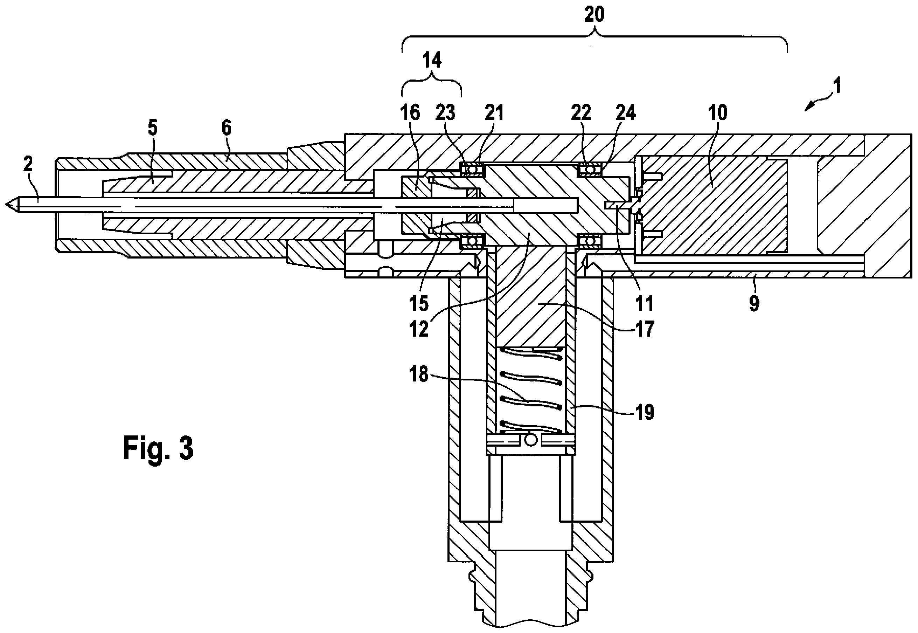

Eine erste Ausführungsform der erfindergemäßen Schweißkopfes (1) nach den Figuren 2 und 3, weist ein transparentes Gehäuse (9) auf und zeigt eine koaxiale Anordnung der Achsen (A, 11) von Elektrode (2) und eines Gleichstrom-Elektromotors (10). Die Verbindung der Elektrode (2) mit ihrer Spannungsversorgung erfolgt über eine nicht dargestellte Mehrdraht- Kupferleitung, die mit einer Schleifkohle (17) elektrisch verbunden ist, welche ihrerseits an einer zylindrisch ausgebildeten und um dieselbe Achse drehbaren aus Kupfer bestehenden Hülse (12) anliegt, die damit eine analoge Funktion wie der Läufer eines Elektromotors hat. Um einen dauernden Kontakt von Hülse (12) und Schleifkohle (17) aufrecht zu erhalten, wird letztere durch eine in einer Führungshülse (19) angeordnete und gegengelagerte Spiralfeder (18) permanent gegen die Hülse (12) gedrückt, wobei die Spiralfeder (18) ihrerseits durch drei nicht mit Bezugszeichen versehene Stifte gesichert ist.

Eine Vorrichtung (20) zur Rotation der Elektrode (2) weist unter anderem eine Kupplung (13) und eine Spannvorrichtung (14) auf, die dazu dienen eine mechanisch starre Verbindung der Achse (11) des Gleichstrom-Elektromotors (10) mit der Elektrode (2) über die Hülse (12) herzustellen. Dabei ist einerseits die Achse (1 1) über die Kupplung (13) fest mechanisch starr mit einem Ende der Hülse (12) verbunden und andererseits die Elektrode mittels der Spannvorrichtung (14) im anderen Ende der Hülse (12) eingespannt.

Die Hülse (12) selbst ist zylindrisch ausgebildet weist aber in ihrem zentralen Bereich der die Schleifkohle (17) kontaktiert einen größeren Querschnitt auf. Auf beiden Seiten des größeren Querschnitts sind Kugellager angeordnet, deren Außenringe (21,22) im Gehäuse (9) befestigt sind und in deren Innenringe (23,24) die Hülse (12) eingespannt ist.

Die Kupplung (13) zur mechanisch starren Verbindung zwischen Hülse (12) und Achse (11) des im Gehäuse (9) ruhenden Gleichstrom-Elektromotors (10) kann im einfachsten Fall beispielsweise dadurch erfolgen, dass in die Außenfläche der Hülse (12) bis zu drei Gewindestifte eingeschraubt werden, die in ihrem Zusammenwirken die Achse (11) zentrierend einklemmen.

Die Spannvorrichtung (14) zur mechanisch starren Verbindung zwischen Hülse (12) und der ansonsten frei rotierenden Elektrode (2) weist einen konischen Spanneinsatz (15) mit vier Längsschlitzen und einer passgenauen Bohrung zur Aufnahme der Elektrode (2) auf.
Die Außenfläche des Spanneinsatz (15) ist so dimensioniert, dass sie zwar genügend tief in die Hülse (12) eingeführt werden kann, aber dann von dieser schließlich zentrisch gehalten wird. Die Hülse (12) weist darüber hinaus ein nicht dargestelltes Außengewinde auf, auf welches eine Spannmutter (16) aufschraubbar ist, wodurch die Elektrode (2) ausreichend fest im Spanneinsatz (1) verklemmt wird.

Die auf diese Weise fest eingespannte Elektrode (2) dreht sich nach Zuschalten des Gleichstrom-Elektromotors (10) mit dessen Drehzahl und der Schweiß Vorgang kann nunmehr beginnen, ohne ein unerwünschtes Auflegieren mehr befürchten zu müssen. Dabei ist zu beachten, dass bei der Wahl höherer Schweißströme auch die Drehzahl des Gleichstrom-Elektromotors (10) erhöht werden sollte, um ein Auflegieren auch dann ganz sicher zu verhindern.

Durch den Gleichstrom-Elektromotor (10) wird in einem weiten Maße sicher gestellt, dass diese notwendige Drehzahl auch dann aufrecht erhalten wird, wenn Schwankungen der Reibung in den Kugellagern auftreten oder die Elektrode (2) auf dem Werkstück (8) schleifen sollte.

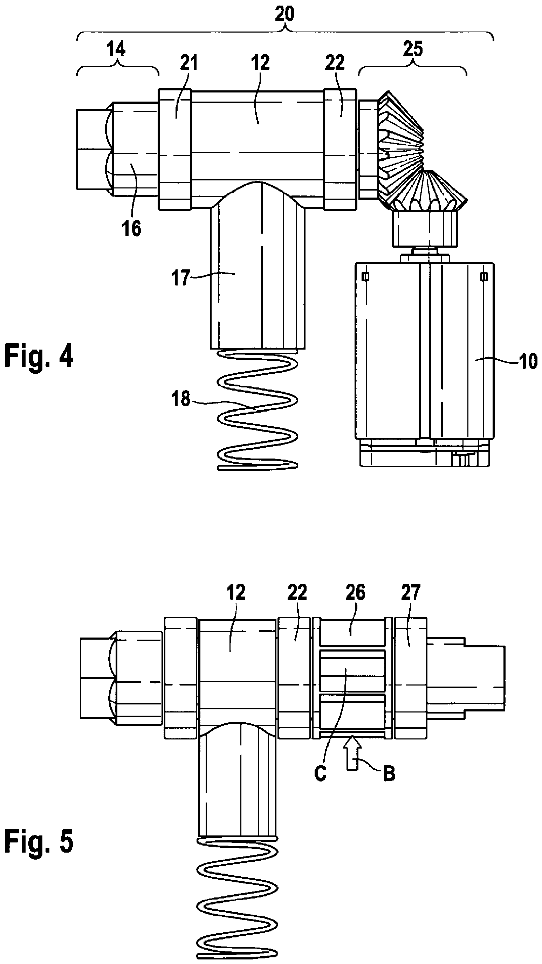

Die in Figur 4 gezeigte zweite Ausführungsform der Erfindung unterscheidet sich von der ersten Ausführungsform durch die Art und Weise der Ankopplung des Gleichstrom-Elektromotors (10) an die Hülse (12). In diesem Fall besteht nämlich keine Koaxiale Anordnung mehr zwischen Hülse (12) und Gleichstrom-Elektromotors (10) sondern die entsprechenden Achsen stehen senkrecht zueinander. Wählt man bei dieser Zahnradverbindung (25) beispielsweise ein Übersetzungsverhältnis 1:1,5, so wird die Drehzahl der gesamten Vorrichtung (20) entsprechend niedriger als die des Gleichstrom-Elektromotors (10) sein.

Das bedeutet, dass sich die gesamte Vorrichtung (20) um ein Drittel langsamer dreht als die Motorwelle (11) des Gleichstrom-Elektromotors (10), womit sich das verfügbare Drehmoment an der Elektrode (2) um ein Drittel erhöht. Auf diese Weise wird dafür gesorgt, dass der Gleichstrom-Elektromotor (10) im Falle einer Kontaktierung des Werkstücks (8) mit der Elektrode (2) auch noch bei höherem Anpressdruck seine Drehzahl möglichst weitgehend aufrecht erhalten kann.

Das in Fig. 5 dargestellte Beispiel eines Schweißkopfes fällt nicht unter den Wortlaut des Anspruchs 1 und weist einen weiteren auf der Hülse (12) befestigten dritten Lageraußenring (27) auf, der zusammen mit dem ihm benachbarten zweiten Lageraußenring (22) den Arbeitsraum (C) einer koaxial zur Hülse (12) angeordneten und lediglich schematisch dargestellten Turbine (26) definiert. Ebenfalls nicht dargestellt ist ein von einem Schweißapparat ausgehender Kühlwasserstrom (B) zum Schweißkopf (1) und von dort wieder zurück zum Schweißapparat. Ursprünglicher Zweck dieses Kühlwasserstroms ist die Vermeidung der Überhitzung des Schweißkopfes (1), bei der vorliegenden Ausführungsform dient er darüber hinaus auch zum Antrieb der Turbine (26) und somit zu der damit verbundenen Rotation der Elektrode (2). Selbstverständlich kann außer Wasser auch ein anderes Kühlmittel beispielsweise mit noch höherer Wärmekapazität verwendet werden, mit dem dann in gleicher Weise die Turbine angetrieben werden kann.

Außerdem kann bei nicht durch ein Fluid gekühlten Schweißköpfen Kühlung durch das ohnehin ausströmende Schutzgas (4) erreicht werden. Leitet man das Schutzgas (4) wiederrum auch über die Turbine (26), so kann diese auch durch die Strömung des Schutzgases (4) angetrieben werden.

Selbstverständlich kann im Schweißapparat für den Antrieb der Turbine (26) auch ein separater Fluid- oder Gasstromkreislauf erzeugt werden, der ausschließlich dem Antrieb der Turbine (26) dient und nicht gleichzeitig auch der Kühlung des Schweißkopfes (1).

Dies könnte zum Beispiel durch die Verbindung des Arbeitsraums (C) der Turbine (26) mit einer Druckluftanlage erfolgen.

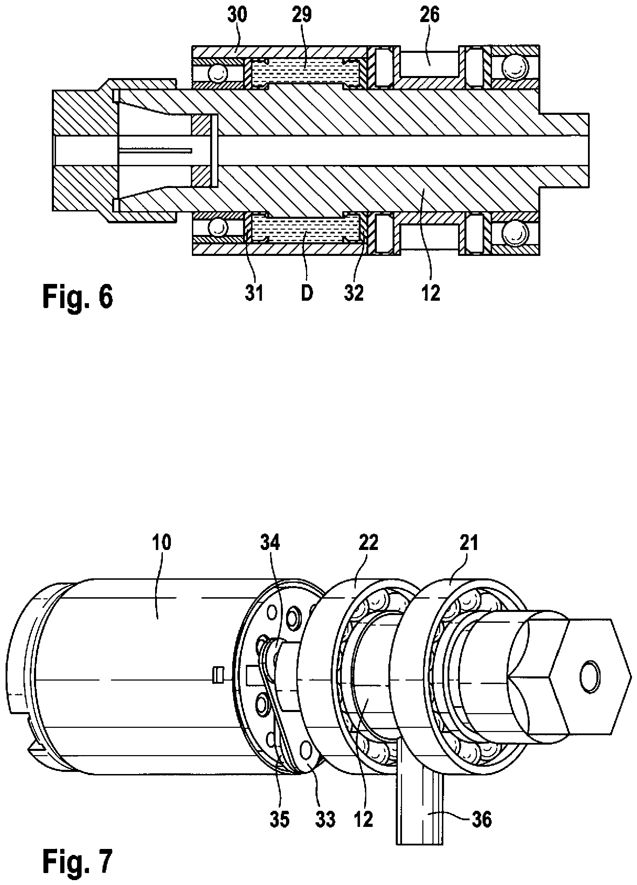

Anstelle der Kontaktierung mittels der Schleifkohle (17) kann man - wie in Figur 6 dargestellt - die Hülse (12), um diese in elektrischem Kontakt mit der Spannungsversorgung zu halten, sich auch in einem Raum (D) drehen lassen, der mit einer elektrisch leitenden Flüssigkeit (29) gefüllt ist. Der Raum (D) ist radial einerseits begrenzt durch eine aus Metall bestehende mit der Spannungsversorgung verbundene stationäre Außenhülse (30) und andererseits durch die Hülse (12). In axialer Richtung ist er durch zwei Dichtungsringe (31,32) abgedichtet. Als elektrisch leitende Flüssigkeiten eignen sich dafür unter anderem Gallium-Legierungen, welche Indium und Zinn enthalten, zum Beispiel sogenanntes Galinstan mit 68,5% Galium, 21,5% Indium und 10% Zinn. Diese Legierung liegt unter Normaldruck zwischen -19C° und 1300C0 in flüssiger Form vor. Diese Art der Übertragung des Schweißstromes auf die Hülse (12) kann selbstverständlich auch dann Anwendung finden, wenn die Hülse (12) nicht durch eine Turbine (26), sondern erfindungsgemäß und wie in Fig.2 gezeigt, durch einen Gleichstrom-Elektromotor (10) angetrieben wird.

Bei der in Fig.7 gezeigten Ausführungsform haben die mit den gleichen Bezugszeichen versehenen Bauteile dieselbe Funktion wie in allen zuvor beschriebenen Ausführungsformen. Die Antriebswelle (1 1) des Gleichstrom-Elektromotors (10) ist aber nicht direkt mit der Hülse (12) verbunden, sondern über eine aus zwei Pleuelstangen (33, 34) und eine mit der Antriebswelle (11) gekoppelte Exzenterscheibe (35).

Dadurch wird die Hülse (12) bei Rotation der Antriebswelle (11) in eine oszillierende Bewegung versetzt, deren Frequenz von der Drehzahl der Antriebswelle (11) und deren Amplitude durch das Ausmaß der exzentrischen Ankopplung bestimmt wird.

Die Verbindung der Elektrode (2) mit ihrer Spannungsversorgung erfolgt durch eine flexible Leitung (36), deren Ende sowohl mechanisch als auch elektrisch fest mit der Hülse (12) verbunden ist.

Bei allen vorstehend beschriebenen Ausführungsformen wird der Schweißvorgang in üblicher Weise dadurch eingeleitet, dass der Schweißkopf (1) zunächst mit seiner nicht dargestellten Spannungsquelle verbunden wird und für den Fall des handgeführten Schweißens die die Schweißarbeiten ausführende Person manuell die Zuführung der als Schutzgas dienenden Gasströmung (4) einleitet. Gleichzeitig mit der Zuführung von Schutzgas (4) wird automatisch der Gleichstrom-Elektromotor, oder die Turbine (26) in Betrieb gesetzt. Dadurch wird sichergestellt, dass der Gleichstrom-Elektromotor (10) oder die Turbine (26) ihre Nenndrehzahl erreicht haben und der Raum zwischen Elektrode (2) und Werkstück (8) mit Schutzgas umgeben ist, bevor der eigentliche Schweißvorgang beginnt. Die gleiche zeitliche Abfolge von Schutzgaszuführung, Rotation der Elektrode (2) einerseits und Beginn des Schweißvorgangs andererseits wird auch bei Schweißvorgängen, die von Robotern gesteuert werden eingehalten.

## Patentansprüche

1. Schweißkopf (1) mit einer sich darin befindlichen, den Schweißstrom führenden hitzebeständigen Elektrode (2), wobei der Schweißvorgang durch einen von der Elektrode (2) ausgehenden und zu einem als elektrische Masse wirkenden metallischen Werkstück (8) führenden und durch eine Spannungsquelle gespeisten Lichtbogen (3) bewirkt wird, und die Elektrode (2) im Schweißkopf (1) drehbar gelagert ist und beim Schweißvorgang durch eine Vorrichtung (20) in eine Bewegung versetzt wird, die aus einer Rotation oder Oszillation um ihre eigene Achse (A) besteht, und im Schweißkopf (1) eine betreibbare Hülse (12) gehalten wird, wobei durch eine Spannvorrichtung (14) ein Kraftschluss zwischen Hülse (12) und Elektrode (2) erzielt wird, wodurch die Elektrode (2) sowohl gegen radiale als auch gegen eine Längsverschiebung gesichert wird, **dadurch gekennzeichnet, dass** die Hülse (12) zur Verhinderung des Auflegierens der Elektrode (2) auf das Werkstück (8) bei direkter mechanischer Berührung sowie zur weitgehenden Vermeidung des Festsetzens von Tropfen eines etwa zugeführten Schweißzusatzes (7) an der Elektrode (2) durch einen Gleichstrom-Elektromotor (10) in Rotation oder über eine Exzentervorrichtung (32, 33, 34) in eine oszillierende Bewegung versetzt wird, wobei der Gleichstrom-Elektromotor (10) bei einem mechanischen Kontakt zwischen Werkstück (8) und Elektrode (2) deren Rotation oder Oszillation durch Erhöhen seiner Leistungsaufnahme bis zu dessen Leistungsgrenze aufrecht erhält.

2. Schweißkopf (1) nach Anspruch 1, **dadurch gekennzeichnet, dass** die Vorrichtung (20) spätestens mit Beginn des Schweißvorgangs in Betrieb genommen und nach dessen Beendigung wieder selbsttätig abgeschaltet wird.

3. Schweißkopf (1) nach Anspruch 2, **dadurch gekennzeichnet, dass** die Inbetriebnahme der Vorrichtung (20) gleichzeitig mit dem manuell veranlassten Einsetzen einer als Schutzgas dienenden Gasströmung (4) erfolgt.

4. Schweißkopf (1) nach Anspruch 1, **dadurch gekennzeichnet, dass** im Schweißkopf (1) die Außenringe (21,22) zweier Lager, beispielsweise Kugel- oder Rollenlager befestigt sind und dass durch die Innenringe (23,24) dieser Lager die betreibbare Hülse (12) gehalten wird.

5. Schweißkopf (1) nach Anspruch 1, **dadurch gekennzeichnet, dass** die Spannvorrichtung (14) aus einem kegeligen Spanneinsatz (15) besteht, welcher durch eine Spannmutter (16) in eine kegelige Bohrung der Hülse (12) gepresst wird.

6. Schweißkopf (1) nach Anspruch 5, **dadurch gekennzeichnet, dass** sowohl die Hülse (12) als auch der Spanneinsatz (15) aus elektrisch gut leitendem Material bestehen und dass die Schweißstromübertragung auf die Hülse (12) durch eine Schleifkohle (17) erfolgt, welche mittels einer vorgespannten Feder (18) stets in mechanischem und damit auch elektrischem Kontakt mit der Hülse (12) steht.

7. Schweißkopf (1) nach Anspruch 6, **dadurch gekennzeichnet, dass** für die Schleifkohle ein Material mit hohem Bronzeanteil gewählt wird.

8. Schweißkopf (1) nach Anspruch 5, **dadurch gekennzeichnet, dass** sowohl die Hülse (12) als auch der Spanneinsatz (15) aus elektrisch gut leitendem Material bestehen und dass die Schweißstromübertragung auf die Hülse (12) durch eine elektrisch leitende Flüssigkeit (29) erfolgt, die sich in einem die Hülse (12) umgebenden flüssigkeitsdichten Raum (28) befindet.

9. Schweißkopf (1) nach Anspruch 1, **dadurch gekennzeichnet, dass** die Kraftübertragung von Elektromotor (10) zur Hülse (12) mittels einer formschlüssigen Zahnradverbindung (25) gewährleistet wird.

10. Schweißkopf (1) nach Anspruch 1, **dadurch gekennzeichnet, dass** zur Kraftübertragung von der Antriebsachse (11) des Gleichstrom-Elektromotors (10) auf die Hülse (12) letzterer koaxial zur Hülse (12) angeordnet ist, wobei die Verbindung zwischen Antriebsachse (11) und Hülse (12) durch ein lösbares Kupplungsstück (13) erfolgt.

11. Schweißkopf (1) nach Anspruch 1, **dadurch gekennzeichnet, dass** von der den Schweißstrom liefernden elektrischen Einheit mit ansteigendem Schweißstrom auch die Drehzahl des Gleichstrom-Elektromotors (10) erhöht und bei abfallendem Schweißstrom wieder erniedrigt wird.

12. Verfahren insbesondere zum Handschweißen, bei welchem ein Schweißkopf (1) nach einem der vorangehenden Ansprüche verwendet wird.

## Claims

1. A welding head (1) comprising a heat-resistant electrode (2) guiding the welding current, wherein the welding operation is brought about by an electric arc (3) that is fed by a voltage source and that is starting from the electrode (2) and running to a work piece (8) which is acting as electrical mass, wherein the electrode (2) is rotatably supported in the welding head (1) and is put into motion by a device (20) during the welding operation, wherein the motion is a rotation or oscillation about the own axis (A) of the electrode (2), wherein a drivable casing (12) is held within the welding head (1), wherein a non-positive connection is achieved between the casing (12) and the electrode (2) by a tightening device (14) whereby the electrode (2) is secured against a radial shifting as well as against a longitudinal shifting, **characterized in that** the casing (12) is put into rotation by a direct current electromotor (10) or in an oscillating movement by an eccentric device (32, 33, 34) for avoiding of alloying up of the electrode (2) on the work piece (8) upon direct mechanical contacting as well as for largely preventing the fixing of drops of any supplied welding material (7) on the electrode (2), wherein, upon a mechanical contact between the work piece (8) and the electrode (2), the direct current electromotor (10) maintains the rotation or oscillation by raising its power consumption up to its power limit.

2. The welding head (1) according to claim 1, **characterized in that** the device (20) is put in operation at the latest with the beginning of the welding operation and is automatically cut off again after its ending.

3. The welding head (1) according to claim 2, **characterized in that** the starting up of the device (20) takes place simultaneously with the manually caused using of a gas flow (4) serving as a protective gas.

4. The welding head (1) according to claim 2, **characterized in in that** the outer rings (21, 22) of two bearings, for example, ball bearings or roller bearings, are fastened in the welding head (1) and that the drivable casing (12) is held by the inner rings (23, 24) of these bearings.

5. The welding head (1) according to claim 1, **characterized in that** the tightening device (14) consists of a conical tightening insert (15) that is pressed by a tightening nut (16) into a conical bore of the casing (12).

6. The welding head (1) according to claim 5, **characterized in that** the casing (12) as well as the tightening insert (15) consist of a material with good electrical conduction, and that the transfer of welding current onto the casing (12) takes place by a carbon brush (17) that always has a mechanical and therefore also electrical contact with the casing (12) by means of a pretensioned spring (18).

7. The welding head (1) according to claim 6, **characterized in that** a material with a high bronze content is selected for the carbon brush.

8. The welding head (1) according to claim 5, **characterized in that** the casing (12) as well as the tightening insert (15) consist of a material with good electrical conduction, and that the transfer of the welding current onto the casing (12) takes place by an electrically conductive liquid (29) located in a liquid tight-chamber (28) surrounding the casing (12).

9. The welding head (1) according to claim 1, **characterized in that** the transfer of force from the electromotor (10) to the casing (12) is ensured by a positive gear connection (25).

10. The welding head (1) according to claim 1, **characterized in that** for the transfer of force from the drive shaft (11) of the direct current electromotor (10) to the casing (12) the latter is arranged coaxially to the casing (12), whereby the connection between the drive shaft (11) and the casing (12) takes place by a releasable coupling piece (13).

11. The welding head (1) according to claim 1, **characterized in that** as the electrical unit supplying the welding current increases the welding current the speed of the direct current electromotor (10) also increases and as the welding current drops the speed is lowered again.

12. A method, in particular for manually welding, wherein a welding head (1) according to one of the preceding claims is used.

## Revendications

1. Tête de soudage (1) dans laquelle se trouve une électrode (2) résistante à la chaleur qui conduit le courant de soudage, l'opération de soudage étant produite par un arc électrique (3) partant de l'électrode (2) et menant à une pièce à usiner (8) métallique faisant office de masse électrique et alimenté par une source de tension, et l'électrode (2) étant montée rotative dans la tête de soudage (1) et, lors de l'opération de soudage, étant amenée par le dispositif (20) en un mouvement qui se compose d'une rotation ou d'une oscillation autour de son propre axe (A), et une douille (12) fonctionnelle étant maintenue dans la tête de soudage (1), un assemblage par force entre la douille (12) et l'électrode (2) étant obtenu par un dispositif de serrage (14), ce par quoi l'électrode (2) est bloquée à la fois contre un décalage radial et aussi contre un décalage longitudinal, **caractérisée en ce que** la douille (12), en vue de prévenir une fixation par alliage de l'électrode (2) sur la pièce à usiner (8) lors d'un contact métallique direct ainsi que pour empêcher dans une large mesure la fixation de gouttes d'un apport de soudage (7) par exemple acheminé au niveau de l'électrode (2), est mise en rotation par un moteur électrique à courant continu (10) ou amenée dans un mouvement oscillant par le biais d'un dispositif excentrique (32, 33, 34), le moteur électrique à courant continu (10), en cas de contact mécanique entre la pièce à usiner (8) et l'électrode (2), maintenant sa rotation ou son oscillation en augmentant sa puissance consommée jusqu'à sa limite de puissance.

2. Tête de soudage (1) selon la revendication 1, **caractérisée en ce que** le dispositif (20) est mis en service au plus tard au moment du début de l'opération de soudage et est de nouveau mis hors circuit automatiquement après la fin de celle-ci.

3. Tête de soudage (1) selon la revendication 2, **caractérisée en ce que** la mise en service du dispositif (20) a lieu simultanément avec l'établissement initié manuellement d'un flux de gaz (4) servant de gaz protecteur.

4. Tête de soudage (1) selon la revendication 1, **caractérisée en ce que** les bagues extérieures (21, 22) de deux paliers, par exemple des roulements à billes ou des paliers à rouleaux, sont fixées dans la tête de soudage (1) et **en ce qu'**une douille (12) fonctionnelle est maintenue par les bagues intérieures (23, 24) de ces paliers.

5. Tête de soudage (1) selon la revendication 1, **caractérisée en ce que** le dispositif de serrage (14) se compose d'un insert de serrage (15) conique, lequel est compressé dans un alésage conique de la douille (12) par un écrou de serrage (16).

6. Tête de soudage (1) selon la revendication 5, **caractérisée en ce que** la douille (12) ainsi que l'insert de serrage (15) se composent tous deux d'un matériau bon conducteur d'électricité et **en ce que** la transmission du courant de soudage à la douille (12) s'effectue par un balai de charbon (17) qui, par l'intermédiaire d'un ressort (18) précontraint, se trouve constamment en contact mécanique et ainsi également électrique avec la douille (12).

7. Tête de soudage (1) selon la revendication 6, **caractérisée en ce qu'**un matériau ayant une part de bronze élevée est choisi pour le balai de charbon.

8. Tête de soudage (1) selon la revendication 5, **caractérisée en ce que** la douille (12) ainsi que l'insert de serrage (15) se composent tous deux d'un matériau bon conducteur d'électricité et **en ce que** la transmission du courant de soudage à la douille (12) s'effectue par un liquide électriquement conducteur (29) qui se trouve dans un espace étanche aux liquides (28) entourant la douille (12).

9. Tête de soudage (1) selon la revendication 1, **caractérisée en ce que** la transmission de force du moteur électrique (10) à la douille (12) est assurée au moyen d'une liaison par roues dentées (25) à complémentarité de formes.

10. Tête de soudage (1) selon la revendication 1, **caractérisée en ce que** pour la transmission de force de l'axe d'entraînement (11) du moteur électrique à courant continu (10) à la douille (12), celui-ci est disposé de manière coaxiale par rapport à la douille (12), la liaison entre l'axe d'entraînement (11) et la douille (12) étant réalisée par une pièce d'accouplement (13) amovible.

11. Tête de soudage (1) selon la revendication 1, **caractérisée en ce que** l'unité électrique délivrant le courant de soudage augmente également la vitesse de rotation du moteur électrique à courant continu (10) lorsque le courant de soudage augmente et la réduit de nouveau lorsque le courant de soudage diminue.

12. Procédé, notamment de soudage manuel, avec lequel est utilisée une tête de soudage (1) selon l'une des revendications précédentes.
